# EUROPEAN PATENT SPECIFICATION

(11) **EP 2 462 324 B1**
(45) Date of publication and mention of the grant of the patent: **15.05.2013**
(21) Application number: 10732345.3
(22) Date of filing: 08.07.2010
(51) Int. Cl.: F01L 1/344

(54) **BOTTOM FEED OIL FLOW CONTROL VALVE FOR A CAM PHASER**
Öldurchflussregelventil für von unten zugeführtes Öl für ein Nockenwellenverstellsystem
Soupape de contrôle de débit d'huile à alimentation inférieure pour synchronisateur de phase de cames

(30) Priority: 07.08.2009 EP 09167446
(43) Date of publication of application: 13.06.2012
(73) Proprietor: Delphi Technologies, Inc., Troy, MI 48007 (US)
(72) Inventor: HAMDI, Nordine, L-4986 Sanem (LU)
(74) Representative: Robert, Vincent
(86) International application number: PCT/EP2010/059780
(87) International publication number: WO 2011/015418

(56) References cited:
- GB-A- 2 409 538
- US-A1- 2002 134 444
- US-A1- 2004 211 312
- US-A1- 2008 066 572
- US-B1- 6 668 778

## Description

### TECHNICAL FIELD

The present invention relates to an oil flow control valve for a cam phaser, and in particular to a bottom feed oil flow control valve.

### BACKGROUND OF THE INVENTION

Cam phasers are used to control the angular relationship of the pulley/sprocket to the camshaft of an engine. A variable cam phaser (VCP) allows adjustment of the phase relationship while the engine is running. Typically, a cam phaser is used to shift the intake cam on a dual overhead cam engine in order to broaden the torque curve of the engine, to increase peak power at high rpm, and to improve the idle quality. Also, the exhaust cam can be shifted by a cam phaser in order to provide internal charge diluent control, which can significantly reduce HC and NOx emissions, or to improve fuel economy.

Cam phasers are typically controlled by hydraulic systems, which use pressurized lubrication oil from the engine in order to change the relative position between camshaft and crankshaft, thus altering the valve timing. The advance or retard position of the camshaft is commanded via an oil flow control valve. The oil flow control valve (OCV in the following) controls the oil flow to different ports entering a cam phaser, thus controlling the angular position of the camshaft relative to pulley or sprocket.

Current OCV are either side feed or bottom feed. Side feed means that the supplied oil is flowing to the valve on the side. On bottom feed OCV, oil is coming from the valve bottom end.

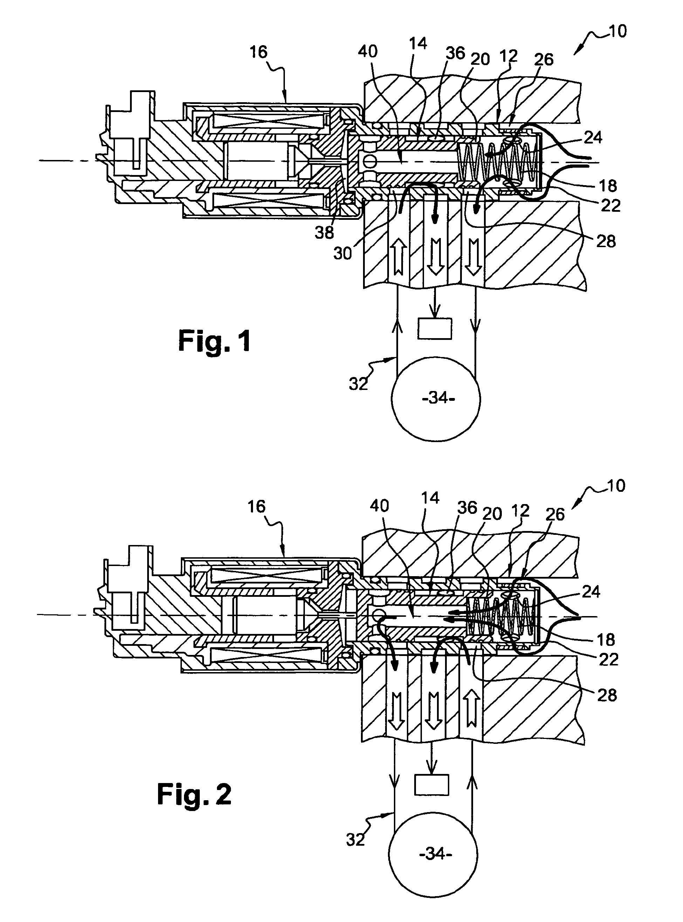

An example of a bottom feed OCV 10 is shown on figures 1 and 2. Said OCV 10 comprises a housing 12, a spool 14 located in the housing 12, and a control unit 16 for controlling the position of the spool 14 in the housing 12. Said spool 14 is slidably mounted along a longitudinal axis A1 in the housing 12, between a front position (fig. 1) and a rear position (fig. 2). A spring 18 is inserted between the spool rear end 20 and the housing rear end 22 in order to biase the spool 14 towards its front position. Said housing 12 is provided with fluid supply inlets 24 in its rear portion 26. A radial rear port 28 and a radial front port 30 are in communication with the hydraulic circuit 32 of the cam phaser 34. A radial vent port 36, or drain port, is arranged between the rear port 28 and the front port 30, said vent port 36 being in communication with an oil reservoir. Said spool 14 is provided with grooves and channels which intersect accordingly with said ports 28, 30, 36 of the housing 12 in order to route the fluid based on the spool's position. Another similar arrangement is disclosed in GB 2 409 538 A.

The control unit 16 is constituted of a solenoid actuator which, when energized, engages the spool front end 38 such as to move the spool 14 towards its rear position against the spring biasing.

Figure 1 shows the spool 14 in its front position, corresponding to a retard position of the cam phaser 34. The oil flow is going from the supply inlet 24 at the bottom of the valve 10, then to the rear port 28, then back to the front port 30, and finally to the vent port 36.

Figure 2 shows the spool 14 in its rear position, corresponding to an advance position of the cam phaser 34, the solenoid actuator being energized. The oil flow is going from the supply inlet 24, then through a longitudinal through bore 40 of the spool 14, to the front port 30, then back to the rear port 28, and finally to the vent port 36.

Such a bottom feed OCV has sensitivity to hydraulic forces applied to the spool. When a high supply pressure is set and when the valve is in advance mode, instead of having a higher flow, as expected when the supply pressure goes up, the flow goes down. This is explained by the hydraulic force applied to the spool for high supply pressure. It pushes the spool against the magnetic force, in the same direction as the spring force, which reduces the flow.

The present invention aims at solving the above mentioned problem in order to improve controllability and reliability of the OCV.

### SUMMARY OF THE INVENTION

According to a first aspect of the present invention there is provided an oil flow control valve for a cam phaser comprising a housing, a spool located in the housing, and a control unit for controlling the position of the spool in the housing, said spool being slidably mounted along a longitudinal axis in the housing, between a front position and a rear position, a spring being inserted between the spool rear end and the housing rear end in order to biased the spool towards its front position, said housing being provided with a fluid supply inlet in its rear portion, a radial rear port and a radial front port in communication with the hydraulic circuit of the cam phaser, and a radial vent port arranged between the rear port and the front port, said vent port being in communication with a oil reservoir, said spool being provided with grooves and channels which intersect accordingly with said ports of the housing in order to route the fluid based on the spool's position, characterized in that said spool rear end and the spool front end delimit, within the housing, respectively a rear end cavity wherein said spring is mounted and a front end cavity, said rear end cavity and said front end cavity being in communication with said oil reservoir and being isolated from the fluid supply pressure.

This invention is giving a technical solution to balance the hydraulic force for a bottom feed OCV. The design of the spool is such that the two ends are not exposed to the supply pressure, but to the vent pressure which corresponds generally to the atmospheric pressure. This prevents a differential pressure to apply on each end of the spool, the hydraulic force being balanced inside the spool.

According to other features of the present invention:
- said cavities are connected to said oil reservoir through said vent port;
- said cavities are connected to each other through at least one longitudinal through channel extending in the spool;
- said through channel comprises a radial through hole which opens to the vent port;
- a rear cap is mounted at the housing rear end in order to close the rear side of the rear end cavity and in order to form a spring retainer for said spring.

### BRIEF DESCRIPTION OF THE DRAWINGS

Preferred embodiments of the present invention will now be described with reference to the accompanying drawings, in which:
- figure 1 and figure 2 are cross sectional views showing an oil flow control valve of the prior art respectively when the spool is in its front position and in its rear position;
- figure 3 and 4 are views similar to the previous ones showing an oil flow control valve according to a preferred embodiment of the present invention respectively when the spool is in its front position and in its rear position;
- figure 5 is a perspective view with cross section showing the oil flow control valve of figure 3 when the spool is in its front position;
- figure 6 is a cross section view showing the spool of the oil flow control valve of figure 3.

### DESCRIPTION OF THE PREFERRED EMBODIMENTS

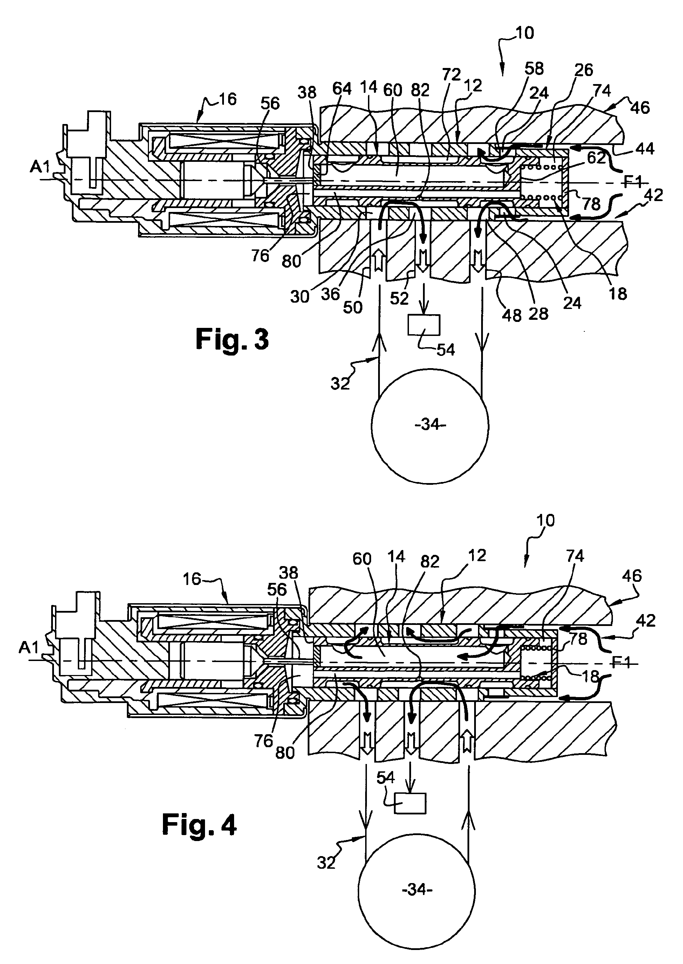

In the following description, different elements having similar functions will be designated with the same reference number. The reference numbers of figures 1 and 2, which refer to the prior art, will be reused for the corresponding elements of figures 3 to 6.

Preferred embodiments of an OCV 10 for a cam phaser 34 in accordance with the invention will now be described in connection with figures 3 to 6.

Figure 3 shows an OCV 10 for controlling the oil flow from an oil supply channel 42, connectable to a source of high pressure oil, into a cam phaser 34 of an internal combustion engine. The OCV 10 is generally mounted in a longitudinal bore 44 in the engine cylinder head 46. The OCV 10 comprises a housing 12, a spool 14 located in the housing 12, and a control unit 16 for controlling the position of the spool 14 in the housing 12 along a longitudinal axis A1, between extreme front and rear positions shown respectively on figures 3 and 4.

In the following description, an orientation from front to rear along the longitudinal axis A1 will be used which should not be considered as limitating. Such an orientation from front to rear corresponds to an orientation from left to right in connection with figures 3 and 4.

The housing 12 of the OCV 10 is formed like a cylindrical sleeve comprising radial ports 28, 30, 36 which are in communication with corresponding oil channels 48, 50, 52 arranged in the cylinder head 46. Among these channels 48, 50, 52, the rear one 48 and the front one 50 are typically used to supply alternatively the cam phaser 34 with oil for moving the cam phaser 34 between advanced and retarded positions, and the central one is a vent channel 52 back to the engine oil sump or oil reservoir 54.

The oil flow through the OCV 10 and the channels 48, 50, 52 is essentially controlled by the longitudinal position of the spool 14 which is reciprocally mounted in the housing 12, as is well known in the art. The placement of the spool 14 in the housing 12 is controlled by the control unit 34, which preferably includes a solenoid actuator. The control unit 34 includes an actuating stem 56 which extends longitudinally and engages the spool front end surface 38 and which, when actuated, biases the spool 14 towards its extreme rear position against the biasing of a spring 18 inserted between the spool rear end 20 and the housing rear end 22. The spring 18 biases the spool 14 towards its extreme front position.

The housing 12 is provided with oil supply inlets 24, formed as radial bores, in its rear portion 26. The rear portion 26 of the housing 12 is essentially cylindrical, having an outer diameter smaller than the inner diameter of the longitudinal bore 44 in order to allow the oil to flow from the oil supply channel 42 to the inner part of the housing 12 through said oil supply inlets 24. Preferably, the rear portion 26 is provided with filtering means 58.

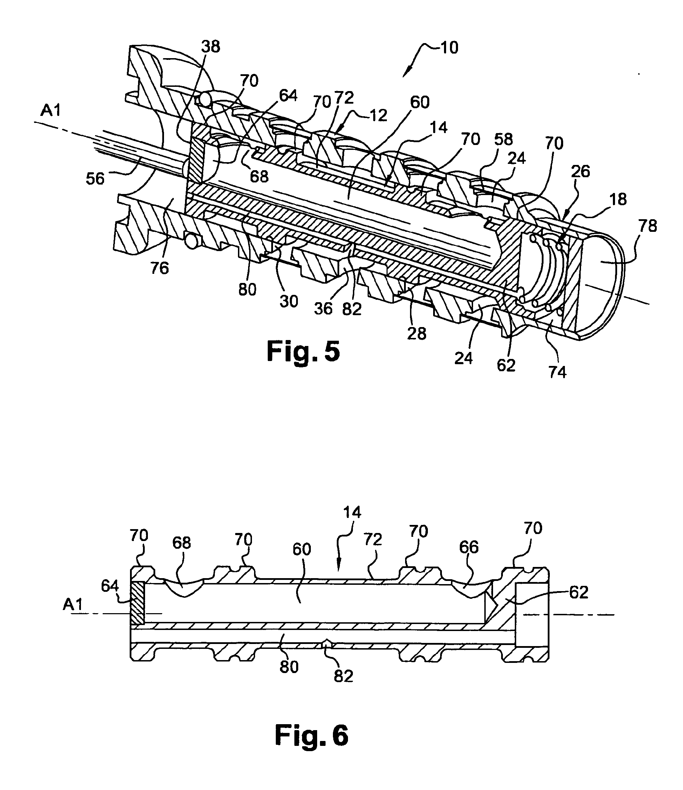

The spool 14, which is shown independently on figure 6, has a substantially cylindrical body provided with grooves and channels which intersect accordingly with the ports 28, 30, 36 of the housing 12 in order to route the oil flow based on the spool's position. The spool 14 includes a main longitudinal bore 60, or channel, which is of elongated shape and which extends longitudinally from a rear end wall 62 to a front end wall 64 of the spool 14. Said main longitudinal bore 60 includes a rear radial inlet 66 facing substantially at least one of the housing supply inlets 24 such that the oil flowing through the housing supply inlets 24 goes into the main longitudinal bore 60 of the spool 14 whatever is the longitudinal position of the spool 14. Said main longitudinal bore 60 also includes a front radial outlet 68 facing at least partly the housing front port 30 only when the spool 14 is in its rear position (figure 4), said front radial outlet 68 facing the inner surface of a front portion of the housing 12 when the spool 14 is in its front position (figure 3). The rear inlet 66 and the front outlet 68 of the spool 14 are each surrounded rearward and frontward by cylindrical portions 70 being a tight sliding fit against the inner surface of the housing 12.

The spool 14 has a circumferential intermediate groove 72 which is facing the housing vent port 36 and which communicates alternatively either with the housing front port 30, when the spool 14 is in its front position, or with the housing rear port 28, when the spool 14 is in its rear position.

According to the present invention, the spool rear ends delimit, within the housing 12, respectively a rear end cavity 74 wherein said spring 18 is mounted and a front end cavity 76 wherein said actuator stem 56 engages the spool 14. Said rear end cavity 74 and said front end cavity 76 are in communication with said oil reservoir 54 and are isolated from the fluid supply pressure coming from the oil supply channel 42. The longitudinal dimension of each cavity 74, 76 is variable, depending on the spool's position.

According to the embodiment shown on the figures, the rear end cavity 74 is delimited frontward by the spool rear end wall 62, which is made of one piece with the spool body, and rearward by a rear cap 78, or plug, which is mounted at the housing rear end in order to close the rear side of the rear portion 26 and in order to form a spring retainer for said spring 18. It has to be noted that the longitudinal distance between the housing supply inlets 24 and the rear cap 78 has to be chosen such that the rear end cavity 74 is isolated from the oil supply pressure even when the spool 14 is in its front position.

According to the present embodiment, the front end cavity 76 is delimited rearward by the front end wall 64 of the spool 14, which is made of a front cap mounted at the spool front end in order to close the main longitudinal bore 60 of the spool 14, and frontward by the control unit 16.

According to exemplary embodiments, the rear cap 78 and the front cap 64 can be press fitted in respectively the housing 12 and the spool 14.

According to the preferred embodiment of the invention, both cavities 74, 76 are connected to said oil reservoir 54 through said vent port 36 thanks to a longitudinal through channel 80 extending in the spool body, in parallel to the main longitudinal bore 60. Advantageously, said through channel 80 opens longitudinally to each cavity 74, 76 and has a radial through hole 82 which opens to the vent port 36, said radial through hole 82 being arranged substantially in an intermediate longitudinal position between both ends of the spool 14. The cavities 74, 76 are isolated from the high pressure fluid passing from the supply inlets 24 to the housing rear and front ports 28, 30 and are connected only to the vent pressure. The vent pressure corresponds generally to the atmospheric pressure.

The oil flow circuit is schematically represented with arrows F1 on figures 3, 4, and 5.

In retard mode, as shown on figures 3 and 5, the solenoid is not energized and the spool 14 is in its front position. The oil supply channel 42 feeds the valve 10 with oil at high pressure. The oil flow enters into the housing 12 and into the spool 14 through the housing supply inlets 24 and through the spool rear inlet 66. Since the spool rear inlet 66 is in communication with the housing rear port 28, and since the spool front outlet 68 is facing the housing inner surface, the oil can only flow to the rear channel 48. After flowing through the cam phaser 34, the oil goes back to the valve 10 through the front channel 50 and the housing front port 30. The housing front port 30 being in communication with the vent port 36 through the spool groove 72, the oil flows back to the oil reservoir 54 through the vent channel 52.

In advance mode, as shown on figure 4, the solenoid is energized such that the spool 14 slides towards its rear position, against the spring return force. The oil supply channel 42 feeds the valve with oil at high pressure. The oil flow enters into the housing 12 and into the spool 14 through the housing supply inlets 24 and through the spool rear inlet 66. Since the spool rear inlet 66 is not in communication with the housing rear port 28, and since the spool front outlet 68 is in communication with the housing front port 30, the oil can only flow to the front channel 50. After flowing through the cam phaser 34, the oil goes back to the valve 10 through the rear channel 48 and the housing rear port 28. The housing rear port 28 being in communication with the vent port 36 through the spool groove 72, the oil flows back to the oil reservoir 54 through the vent channel 52.

In retard mode and in advance mode, the pressure applying on the front end surface of the spool 14 and on the rear end surface of the spool 14 is always the vent pressure which brings equilibrium for the control of the spool 14. Therefore, in advance mode, the actuator has only to provide enough pressure on the spool 14 for compressing the spring 18. On contrary to the prior art, the increase in oil supply pressure does not create hydraulic force acting against the actuator force.

## Claims

1. An oil flow control valve (10) for a cam phaser (34) comprising a housing (12), a spool (14) located in the housing (12), and a control unit (16) for controlling the position of the spool (14) in the housing (12), said spool (14) being slidably mounted along a longitudinal axis (A1) in the housing (12), between a front position and a rear position, a spring (18) being inserted between the spool rear end and the housing rear end in order to bias the spool (14) towards its front position, said housing (12) being provided with a fluid supply inlet (24) in its rear portion (26), a radial rear port (28) and a radial front port (30) in communication with the hydraulic circuit of the cam phaser (34), and a radial vent port (36) arranged between the rear port (28) and the front port (30), said vent port (36) being in communication with an oil reservoir (54), said spool (14) being provided with grooves and channels which intersect accordingly with said ports (28, 30, 36) of the housing (12) in order to route the oil based on the spool's position, **characterized in that** said spool rear end and the spool front end delimit, within the housing (12), respectively a rear end cavity (74) wherein said spring (18) is mounted and a front end cavity (76), said rear end cavity (74) and said front end cavity (76) being in communication with said oil reservoir (54) and being isolated from the fluid supply pressure.

2. Valve (10) according to claim 1, **characterized in that** said cavities (74, 76) are connected to said oil reservoir (54) through said vent port (36).

3. Valve (10) according to claim 1 or 2, **characterized in that** said cavities (74, 76) are connected to each other through at least one longitudinal through channel (80) extending in the spool (14).

4. Valve (10) according to claim 2 and 3, **characterized in that** said through channel (80) comprises a radial through hole (82) which opens to the vent port (36).

5. Valve (10) according to anyone of the preceding claims, **characterized in that** a rear cap (78) is mounted at the housing rear end in order to close the rear side of the rear end cavity (74) and in order to form a spring retainer for said spring (18).

## Patentansprüche

1. Ein Öl-Strömungssteuerventil (10) für einen Nockenwellenversteller (34), das aufweist ein Gehäuse (12), eine Spule (14), die sich in dem Gehäuse (12) befindet, und eine Steuereinheit (16) zum Steuern der Position der Spule (14) in dem Gehäuse (12), wobei die Spule (14) verschiebbar entlang einer Längsachse (A1) in dem Gehäuse (12) zwischen einer vorderen Position und einer hinteren Position angebracht ist, wobei eine Feder (18) zwischen dem hinteren Ende der Spule und dem hinteren Ende des Gehäuses eingefügt ist, um die Spule (14) in Richtung ihrer vorderen Position zu beeinflussen, wobei das Gehäuse (12) versehen ist mit einem Fluid-Zufuhr-Einlass (24) in seinem hinteren Teil (26), einem radialen hinteren Anschluss (28) und einem radialen vorderen Anschluss (30) in Kommunikation mit der Hydraulikschaltung des Nockenwellenverstellers (34), und einem radialen Entlüftungsanschluss (36), der zwischen dem hinteren Anschluss (28) und dem vorderen Anschluss (30) angeordnet ist, wobei der Entlüftungsanschluss (36) in Kommunikation mit einem Ölbehälter (54) ist, wobei die Spule (14) mit Rillen und Kanälen versehen ist, die sich entsprechend mit den Anschlüssen (28, 30, 36) des Gehäuses (12) kreuzen, um das Öl basierend auf der Position der Spule zu leiten, **dadurch gekennzeichnet, dass** das hintere Ende der Spule und das vordere Ende der Spule in dem Gehäuse (12) einen hinteren Hohlraum (74), in dem die Feder (18) angebracht ist, beziehungsweise einen vorderen Hohlraum (76) begrenzen, wobei der hintere Hohlraum (74) und der vordere Hohlraum (76) in Kommunikation mit dem Ölbehälter (54) sind und von dem Fluid-Zufuhr-Druck isoliert sind.

2. Ventil (10) gemäß Anspruch 1, **dadurch gekennzeichnet, dass** die Hohlräume (74, 76) mit dem Ölbehälter (54) durch den Entlüftungsanschluss (36) verbunden sind.

3. Ventil (10) gemäß Anspruch 1 oder 2, **dadurch gekennzeichnet, dass** die Hohlräume (74, 76) durch zumindest einen in Längsrichtung verlaufenden Durchgangskanal (80) miteinander verbunden sind, der sich in der Spule (14) erstreckt.

4. Ventil (10) gemäß Anspruch 2 und 3, **dadurch gekennzeichnet, dass** der Durchgangskanal (80) ein radiales Durchgangsloch (82) aufweist, das sich zu dem Entlüftungsanschluss (36) öffnet.

5. Ventil (10) gemäß einem der vorhergehenden Ansprüche, **dadurch gekennzeichnet, dass** eine hintere Kappe (78) an dem hinteren Ende des Gehäuses angebracht ist, um die Rückseite des hinteren Hohlraums (74) zu schließen und um einen Federhalter für die Feder (18) zu bilden.

## Revendications

1. Valve de commande de débit d'huile (10) pour un phaseur de came (34) comprenant un boîtier (12), un tiroir (14) placé dans le boîtier (12), et une unité de commande (16) pour commander la position du tiroir (14) dans le boîtier (12), ledit tiroir (14) étant monté en coulissement le long d'un axe longitudinal (A1) dans le boîtier (12), entre une position avant et une position arrière, un ressort (18) étant inséré entre l'extrémité arrière du tiroir et l'extrémité arrière du boîtier afin de solliciter le tiroir (14) vers sa position avant, ledit boîtier (12) étant pourvu d'une entrée d'alimentation de fluide (24) dans sa portion arrière (26), d'un orifice arrière radial (28) et d'un orifice avant radial (30) en communication avec le circuit hydraulique du phaseur de came (34), et d'un orifice-évent radial (36) agencé entre l'orifice arrière (28) et l'orifice avant (30) ledit orifice-évent (36) étant en communication avec un réservoir d'huile (54), ledit tiroir (14) étant pourvu de rainures et de canaux qui se recoupent en accord avec lesdits orifices (28, 30, 36) du boîtier (12) afin d'acheminer l'huile en se basant sur la position du tiroir,
**caractérisée en ce que** ladite extrémité arrière du tiroir et ladite extrémité avant du tiroir délimitent, à l'intérieur du boîtier (12), respectivement une cavité d'extrémité arrière (74) dans laquelle est monté ledit ressort (18), et une cavité d'extrémité avant (76), ladite cavité d'extrémité arrière (74) et ladite cavité d'extrémité avant (76) étant en communication avec ledit réservoir d'huile (54) et étant isolées vis-à-vis de la pression d'alimentation du fluide.

2. Valve (10) selon la revendication 1, **caractérisée en ce que** lesdites cavités (74, 76) sont connectées audit réservoir d'huile (54) via ledit orifice-évent (36).

3. Valve (10) selon la revendication 1 ou 2, **caractérisée en ce que** lesdites cavités (74, 76) sont connectées l'une à l'autre via au moins un canal traversant longitudinal (80) s'étendant dans le tiroir (14).

4. Valve (10) selon la revendication 2 et 3, **caractérisée en ce que** ledit canal traversant (80) comprend un trou traversant radial (82) qui s'ouvre vers l'orifice-évent (36).

5. Valve (10) selon l'une quelconque des revendications précédentes,
**caractérisée en ce qu'**un capuchon arrière (78) est monté à l'extrémité arrière du boîtier afin de fermer le côté arrière de la cavité d'extrémité arrière (74) et afin de former un moyen de retenue de ressort pour ledit ressort (18).
